# EUROPÄISCHE PATENTSCHRIFT

(11) **EP 2 247 883 B1**
(45) Veröffentlichungstag und Bekanntmachung des Hinweises auf die Patenterteilung: **11.05.2016**
(21) Anmeldenummer: 09711695.8
(22) Anmeldetag: 17.02.2009
(51) Int. Cl.: B32B 27/32, B32B 1/08, F16L 9/12

(54) **VERWENDUNG EINES VERBUNDROHRS MIT EINEM ROHR AUS VERNETZTEM POLYETHYLEN ZUM TRANSPORT VON FERNWÄRME**
USE OF A COMPOSITE PIPE HAVING A PIPE MADE OF CROSS-LINKED POLYETHYLENE FOR DISTRIC HEATING
UTILISATION D'UN TUYAU COMPOSITE COMPRENANT UN TUYAU EN POLYÉTHYLÈNE RÉTICULÉ POUR CHAUFFAGE URBAIN

(30) Priorität: 20.02.2008 DE 202008002386 U
(43) Veröffentlichungstag der Anmeldung: 10.11.2010
(73) Patentinhaber: Rehau AG + Co, 95111 Rehau (DE)
(72) Erfinder: HEINDL, Andreas, 91126 Schwabach (DE); OELSCHLEGEL, Alexander, 95176 Konradsreuth (DE); WINTER, Karlheinz, 95111 Rehau (DE)
(86) Internationale Anmeldenummer: PCT/EP2009/001097
(87) Internationale Veröffentlichungsnummer: WO 2009/103483

(56) Entgegenhaltungen:
- WO-A-92/19904
- WO-A-99/57474
- DE-C1- 4 432 481
- GB-A- 2 034 433
- US-A- 4 144 111
- US-A- 4 614 208

## Beschreibung

Die Erfindung betrifft die Verwendung eines Verbundrohrs mit einem Rohr aus vernetztem Polyethylen zum Transport von Fernwärme.

Derartige Rohre werden häufig zum Fernwärmetransport eingesetzt und sind daher hohen Belastungen ausgesetzt. Zur Verstärkung dieser Rohre ist es bekannt, Aramidfasern einzusetzen. Nachteilig ist hierbei, dass diese Aramidfasern ein nicht definierbares Alterungsverhalten zeigen. Drastische Verringerungen der Festigkeit im Dauerbetrieb können nicht ausgeschlossen werden und reduzieren daher die gewährleistbare Lebensdauer der Rohre beträchtlich.

Die WO-A-92/19904 offenbart die Verwendung eines Verbundrohres zum Transport von Fernwärme, wobei das Verbundrohr mit einem Rohr aus vernetztem Polyethylen und mindestens einer das Rohr umgebenden Schicht versehen ist, wobei zwischen der Schicht und dem Rohr eine Armierung aus mindestens einem Stahlfaden angeordnet ist.

Vor diesem Hintergrund liegt der Erfindung die Aufgabe zugrunde, die Verwendung eines Verbundrohrs mit einem Rohr aus vernetztem Polyethylen anzugeben, welches dauerhaft hoch belastbar ist, zum Transport von Fernwärme.

Erfindungsgemäß wird die Aufgabe durch die Merkmale des Anspruchs 1 gelöst. Die Stahlfäden weisen eine sehr hohe Alterungsbeständigkeit auf. Auch beim Einsatz von Stahlfäden ist eine kostengünstige Fertigung von armierten Rohren mit vernetztem Polyethylen-Inliner möglich.

Der Durchmesser des Stahlfadens kann 0,1 bis 1 mm, vorzugsweise 0,2 bis 0,7 mm, besonders bevorzugt 0,3 bis 0,5 mm, insbesondere ca. 0,4 mm betragen. Geeignete Dicken für die das Rohr umgebende Schicht sind 0,5 bis 4 mm, vorzugsweise 1 bis 3 mm, besonders bevorzugt 1,5 bis 2,5 mm, insbesondere ca. 2 mm.

Vorzugsweise besteht der Stahlfaden aus Edelstahl gemäß DIN EN 10020. Der Edelstahl enthält gemäß der Erfindung mindestens 10 Gewichts-% Chrom. Dieser ist im austenitischen oder ferritischen Mischkristall gelöst. Zusätzlich kann der Edelstahl Nickel und/oder Molybdän und/oder Mangan und/oder Niob enthalten.

Die das Rohr umgebende Schicht kann aus Kunststoff, vorzugsweise einem Thermoplast, insbesondere Polyethylen bestehen. Zwischen der Armierung und dem Rohr ist eine Zwischenschicht angeordnet, welche ebenfalls aus einem Kunststoff, vorzugsweise einem Thermoplast, insbesondere Polyethylen bestehen kann. Im Rahmen der Erfindung liegt es insbesondere, dass die Schicht und die Zwischenschicht aus demselben Werkstoff bestehen. Die Sandwich-Konstruktion ermöglicht eine zuverlässige und dauerhafte Verschweißung des mindestens einen Stahlfadens zwischen den beiden Schichten. Die Zwischenschicht besitzt vorzugsweise eine Stärke von 0,05 bis 0,4, besonders bevorzugt 0,1 bis 0,3, insbesondere ca. 0,2 mm.

Gemäß der Erfindung sind mehrere Stahlfäden zur Armierung vorgesehen. Diese sind zu Fadengruppen mit jeweils mindestens 2 Fäden zusammengefasst. Die Fadengruppen sind in Axialrichtung fortschreitend um das Rohr gewickelt und bilden hierdurch eine Stahlfaden- bzw. Fadengruppenwicklung. Mehrere Wicklungen sind vorgesehen, die voneinander beabstandet angeordnet sind.

Gemäß der Erfindung kreuzen sich Wicklungen aufgrund gegenseitiger Wicklungsrichtung. Dies hat zur Folge, dass die Wicklungen auf der Oberfläche der Zwischenschicht ein rautenförmiges Muster bilden. Die Fadengruppen bilden vorzugsweise ein flaches Band, welches mit einer Breitseite zumindest bereichsweise flächig auf der darunter liegenden Oberfläche aufliegt. Vorzugsweise sind die Wicklungen derart miteinander verflochten, dass eine Wicklung jeweils zweimal unter und darauffolgend zweimal über die kreuzenden Wicklungen u.s.w. geführt wird.

Gemäß einer besonders bevorzugten Ausführungsform der Erfindung ist auf die Schicht außenseitig eine Sauerstoffsperrschicht aufgebracht, die insbesondere aus EVOH (Ethylen/Vinylalkohol) bestehen kann. Zweckmäßigerweise ist zwischen diesen beiden Lagen eine Haftvermittlerschicht angeordnet, die die Bindung zwischen der Schicht und der Sperrschicht verbessert. Hierbei können die Haftvermittlerschicht und die Sperrschicht coextrudiert sein. Die Sauerstoffsperrschicht verhindert das Eindiffundieren von Gasen, insbesondere Sauerstoff, durch die Rohrwand deutlich. Darüber hinaus sorgt sie für eine gute Haftung zwischen dem Verbundrohr und einer PUR-Schaum-Isolierung für den Fall einer entsprechenden Einschäumung des Verbundrohres zwecks werksseitiger Vorisolierung.

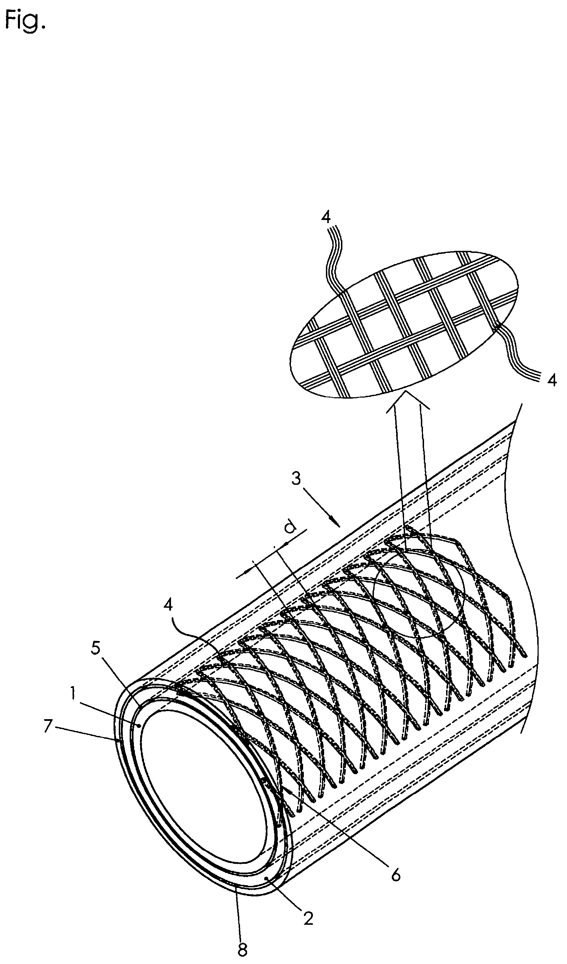

Im Folgenden wird die Erfindung anhand einer lediglich ein Ausführungsbeispiel darstellenden Zeichnungen erläutert. Die einzige Figur zeigt schematisch eine dreidimensionale Darstellung eines Verbundrohres zur erfindungsgemäßen Verwendung zum Transport von Fernwärme.

Das Verbundrohr weist ein Rohr 1 aus vernetztem Polyethylen, insbesondere PE-Xa auf. Als geeignete Außendurchmesser des gesamten Verbundrohres ist insbesondere das Intervall zwischen 40 mm und 250 mm geeignet. Das Verbundrohr weist eine das Rohr 1 umgebende Schicht 2 aus Polyethylen mit einer Schichtdicke von ca. 2 mm auf. Zwischen dieser Polyethylenschicht und dem Rohr 1 ist eine Armierung 3 aus mehreren Stahlfäden 4 angeordnet. Im Ausführungsbeispiel besitzen die Stahlfäden 4 einen Durchmesser von ca. 0,4 mm. Als geeignetes Material für die Stahlfäden 4 hat sich insbesondere Edelstahl gemäß DIN EN 10020 herausgestellt, wobei der Edelstahl mindestens 10 Gewichts-% Chrom enthält. Zusätzlich können Nickel und/oder Molybdän und/oder Mangan und/oder Niob im Edelstahl enthalten sein. Denkbar ist beispielsweise der Einsatz von "Edelstahl hart" mit einer Zugfestigkeit von ca. 2.000 N/mm² oder alternativ auch von "Edelstahl weich" mit einer Zugfestigkeit von ca. 700 N/mm². Zwischen der Armierung 3 und dem Rohr 1 ist eine Zwischenschicht 5 angeordnet, welche ebenfalls aus Polyethylen besteht. Bei der Herstellung des erfindungsgemäßen Verbundrohres wird zunächst das mit der Zwischenschicht 5 beschichtete Rohr 1 mit den Edelstahlfäden 3 umwickelt oder umflochten und anschließend mit dem thermoplastischen Werkstoff der äußeren Schicht 2 umspritzt. Hierdurch erfolgt eine definierte Verschweißung der Edelstahlfäden 3 zwischen den beiden Schichten 2,5, welche für die dauerhaft hohe Belastbarkeit des Verbundrohres wesentlich ist.

Die Figur zeigt, dass mehrere Stahlfäden 3 jeweils zu einer Fadengruppe zusammengefasst sind. Eine Fadengruppe besteht jeweils aus mehreren parallel zueinander und nebeneinander liegenden Edelstahlfäden 3, welche allesamt auf der Oberfläche der Zwischenschicht 5 aufliegen. Die Fadengruppe bildet hierbei ein flaches Band, welches mit einer Breitseite bereichsweise flächig auf der darunter liegenden Oberfläche aufliegt. Im Ausführungsbeispiel sind jeweils vier Fäden 4 zu einer Fadengruppe zusammengefasst. Die Fadengruppen sind in Axialrichtung des Rohres 1 fortschreitend um das Rohr 1 gewickelt und bilden hierdurch Fadengruppenwicklungen. Alternativ aber nicht im Rahmen der Erfindung könnten jedoch auch Stahlfadenwicklungen mit jeweils nur einem Stahlfaden 4 vorgesehen sein, und zwar in analoger Weise.

Die Figur zeigt weiterhin, dass mehrere Wicklungen vorgesehen sind, welche voneinander beabstandet sind. Typische Abstände sind d = 0,5 bis 2 cm, vorzugsweise 0,8 bis 1,5 cm. Nicht im Rahmen der Erfindung liegt es, dass die Fäden 3 ein im Wesentlichen geschlossenes Geflecht darstellen. Der Figur ist ferner zu entnehmen, dass sich Wicklungen aufgrund gegensinniger Wicklungsrichtung kreuzen, so dass von den Wicklungen auf der Oberfläche der Zwischenschicht 5 ein gleichförmiges Rautenmuster gebildet wird.

Der auszugsweisen Darstellung in der Fig. ist zu entnehmen, dass die Fadengruppenwicklungen derart miteinander verflochten sind, dass eine Fadengruppe jeweils zweimal unter und darauffolgend zweimal über die kreuzenden Fadengruppen usw. geführt wird. Diese Flechtung könnte natürlich analog für den Fall angewandt werden, bei dem eine Stahlfadenwicklung aus lediglich einem Stahlfaden besteht.

Der Figur ist ferner zu entnehmen, dass auf die Schicht (2) außenseitig eine Sauerstoffsperrschicht (7) aufgebracht ist, wobei zwischen der Schicht (2) und der aus EVOH bestehenden Sauerstoffsperrschicht (7) eine Haftvermittlerschicht (8) angeordnet ist.

## Patentansprüche

1. Verwendung eines Verbundrohrs
- mit einem Rohr (1) aus vernetztem Polyethylen und mindestens einer das Rohr (1) umgebenden Schicht,
- wobei zwischen der Schicht (2) und dem Rohr (1) eine Armierung (3) aus mehreren Stahlfäden (4) angeordnet ist, die zu mehreren Fadengruppen mit jeweils mindestens zwei Stahlfäden (4) zusammengefasst sind,
- wobei zwischen Armierung (3) und Rohr (1) eine Zwischenschicht (5) vorgesehen ist
- wobei die Armierung (3) zwischen der Zwischenschicht (5) und der Schicht (2) verschweißt ist
- wobei die Fadengruppen in Axialrichtung fortschreitend um das Rohr (1) gewickelt sind und hierdurch Fadengruppenwicklungen bilden,
- wobei mehrere voneinander beabstandete Fadengruppenwicklungen vorgesehen sind,
- wobei sich Fadengruppenwicklungen aufgrund gegensinniger Wicklung kreuzen, so dass von den Fadengruppenwicklungen auf der Oberfläche der Zwischenschicht (5) ein gleichförmiges Rautenmuster gebildet wird,
- wobei die Stahlfäden (4) aus Edelstahl bestehen und
- wobei der Edelstahl mindestens 10 Gewichts-% Chrom enthält
zum Transport von Fernwärme.

2. Verwendung nach Anspruch 1, **dadurch gekennzeichnet, dass** die Schicht (2) aus Kunststoff, vorzugsweise einem Thermoplast, insbesondere Polyethylen besteht.

3. Verwendung nach Anspruch 2, **dadurch gekennzeichnet, dass** die Zwischenschicht (5) aus einem Kunststoff, vorzugsweise einem Thermoplast, insbesondere Polyethylen besteht.

4. Verwendung nach einem der Ansprüche 1 bis 3, **dadurch gekennzeichnet, dass** die Fadengruppen jeweils ein flaches Band bilden, welches mit einer Breitseite zumindest bereichsweise flächig auf der darunter liegenden Oberfläche aufliegt.

5. Verwendung nach einem der Ansprüche 1 bis 4, **dadurch gekennzeichnet, dass** die Wicklungen derart miteinander verflochten sind, dass eine Wicklung jeweils zweimal unter und darauffolgend zweimal über die kreuzenden Wicklungen u.s.w. geführt wird.

6. Verwendung nach einem der Ansprüche 1 bis 5, **dadurch gekennzeichnet, dass** auf die Schicht (2) außenseitig eine Sauerstoffsperrschicht (7) aufgebracht ist, wobei vorzugsweise zwischen der Schicht (2) und der Sauerstoffsperrschicht (7) eine Haftvermittlerschicht (8) angeordnet ist.

## Claims

1. Use of a composite pipe
- comprising a pipe (1) of crosslinked polyethylene and at least one layer surrounding the pipe (1),
- wherein a reinforcement (3) of multiple steel filaments (4) combined into multiple groups of filaments each comprising at least two steel filaments (4) is arranged between the layer (2) and the pipe (1),
- wherein an intermediate layer (5) is provided between the reinforcement (3) and the pipe (1),
- wherein the reinforcement (3) is welded between the intermediate layer (5) and the layer (2)
- wherein the groups of filaments are wound progressively in the axial direction around the pipe (1) and thereby form element group windings,
- wherein multiple spaced-apart filaments group windings are provided,
- wherein the group windings cross as a result of being wound in opposite directions, so that a uniform rhombic pattern is formed on the surface of the intermediate layer (5) by the filament group windings,
- wherein the steel filaments (4) consist of high-grade steel and
- wherein the high-grade steel contains at least 10% by weight of chromium,
for district heating.

2. Use according to Claim 1, **characterized in that** the layer (2) consists of plastic, preferably a thermoplastic, in particular polyethylene.

3. Use according to Claim 2, **characterized in that** the intermediate layer (5) consists of a plastic, preferably a thermoplastic, in particular polyethylene.

4. Use according to one of Claims 1 to 3, **characterized in that** the groups of filaments respectively form a flat strip, which lies with a broad side in surface-area contact, at least in certain regions, on the underlying surface.

5. Use according to one of Claims 1 to 4, **characterized in that** the windings are interwoven with one another in such a way that a winding is respectively taken twice under and then twice over the crossing windings and so on.

6. Use according to one of Claims 1 to 5, **characterized in that** an oxygen barrier layer (7) is applied on the outside of the layer (2), wherein a layer of an adhesion promoter (8) is preferably arranged between the layer (2) and the oxygen barrier layer (7).

## Revendications

1. Utilisation d'un tuyau composite
- présentant un tuyau (1) en polyéthylène réticulé et au moins une couche entourant le tuyau (1),
- une armature (3) constituée de plusieurs fils d'acier (4), qui sont rassemblés en plusieurs groupes de fils présentant à chaque fois au moins deux fils d'acier (4), étant disposée entre la couche (2) et le tuyau (1),
- une couche intermédiaire (5) étant disposée entre l'armature (3) et le tuyau (1),
- l'armature (3) étant soudée entre la couche intermédiaire (5) et la couche (2)
- les groupes de fils étant enroulés progressivement dans le sens axial autour du tuyau (1) et des spires de groupes de fils se formant ainsi,
- plusieurs spires de groupes de fils écartées les unes des autres étant réalisées,
- les spires de groupes de fils se croisant en raison d'un enroulement opposé, de telle sorte que les spires de groupes de fils forment un modèle régulier de losanges à la surface de la couche intermédiaire (5),
- les fils d'acier (4) étant constitués d'acier inoxydable et
- l'acier inoxydable contenant au moins 10% en poids de chrome
pour le transport de chauffage urbain.

2. Utilisation selon la revendication 1, **caractérisée en ce que** la couche (2) est constituée de matériau synthétique, de préférence d'un thermoplastique, en particulier de polyéthylène.

3. Utilisation selon la revendication 2, **caractérisée en ce que** la couche intermédiaire (5) est constituée d'un matériau synthétique, de préférence d'un thermoplastique, en particulier de polyéthylène.

4. Utilisation selon l'une quelconque des revendications 1 à 3, **caractérisée en ce que** les groupes de fils forment à chaque fois une bande plate qui est placée avec un côté large, au moins en partie, à plat sur la surface sous-jacente.

5. Utilisation selon l'une quelconque des revendications 1 à 4, **caractérisée en ce que** les spires sont tressées les unes avec les autres de manière telle qu'une spire est guidée à chaque fois deux fois sous et ensuite deux fois sur les spires qui se croisent, etc.

6. Utilisation selon l'une quelconque des revendications 1 à 5, **caractérisée en ce qu'**une couche (7) de blocage d'oxygène est appliquée à l'extérieur de la couche (2), une couche (8) de promoteur d'adhérence étant de préférence disposée entre la couche (2) et la couche (7) de blocage d'oxygène.
